(19) Europäisches Patentamt
European Patent Office
Office européen des brevets

(11) EP 3 023 007 A1

(12) **EUROPEAN PATENT APPLICATION**
published in accordance with Art. 153(4) EPC

(43) Date of publication:
**25.05.2016 Bulletin 2016/21**

(21) Application number: **14825815.5**

(22) Date of filing: **14.08.2014**

(51) Int Cl.:
***A01N 43/40*** *(2006.01)* ***A01N 37/34*** *(2006.01)*
***A01P 3/00*** *(2006.01)*

(86) International application number:
**PCT/CN2014/084366**

(87) International publication number:
**WO 2015/007250 (22.01.2015 Gazette 2015/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.07.2013 CN 201310293952**

(71) Applicant: **JIANGSU ROTAM CHEMISTRY CO., LTD.**
**Kunshan Economic & Technical Development Zone**
**Suzhou Jiangsu 215301 (CN)**

(72) Inventors:
- **WU, Yifan**
  **Hong Kong (CN)**
- **BRISTOW, James T.**
  **Hong Kong (CN)**

(74) Representative: **Akers, Noel James**
**N.J. Akers & Co**
**63 Lemon Street**
**Truro, Cornwall TR1 2PN (GB)**

# (54) FUNGICIDAL MIXTURE

(57) The invention relates to a fungicidal mixture, in particular to a fungicidal mixture containing boscalid and chlorothalonil active ingredients. The weight ratio of boscalid to chlorothalonil is 1:100-100:1. The amount of boscalid and chlorothalonil accounts for 5-90% of the fungicidal mixture. By binary mixing of boscalid and chlorothalonil, the prepared fungicidal mixture has a synergistic control effect, expands the fungicidal spectrum and achieves multiple effects with one formulation. Moreover, the modes of action of boscalid and chlorothalonil are different. Hence, the effect of disease prevention can be enhanced and the drug resistance of pathogenic fungi is not developed easily.

EP 3 023 007 A1

## Description

The present invention relates to a fungicidal mixture, in particular to a fungicidal mixture containing boscalid and chlorothalonil active ingredients.

## BACKGROUND

In the production of horticultural crops and dry-farming crops, the crops may get a variety of diseases because of infection by various fungi or bacteria. They may also suffer from rotten seeds, rotten roots or seedling death due to a lot of pathogenic or saprophytic soil fungi (such as Pythium, Phytophthora, Rhizoctonia Rhizoctonia, Fusarium, gray mold, etc.) and bacteria (soft rot bacteria) infection.

Boscalid, with chemical name as 2-chloro-N-(4'-chlorobiphenyl-2-yl) nicotinamide, is represented by the following structure:

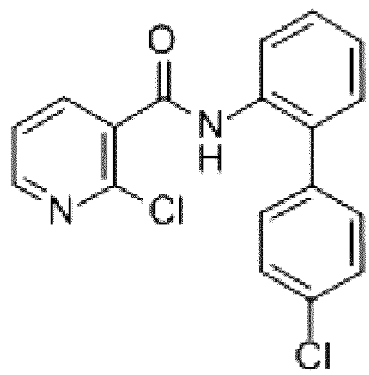

Boscalid is a nicotinamide fungicide. The first Boscalid was successfully developed by a German company named BASF Corporation. It has a wide fungicidal spectrum and its preventive effect is effective to almost all types of fungal diseases, particularly effective to control powdery mildew, gray mold, root rot, Sclerotinia infection and other rot diseases. It will not easily produce cross-resistance and is effective to bacteria that are tolerant to other formulations. It is mainly applied to prevent the plant diseases of rape, grapes, fruit trees, vegetables and field crops. The trial results represent that, boscalid is able to effectively prevent and control sclerotia sclerotium. The control effect and disease index of boscalid after applying it once in a suitable period reached more than 80% which outperformed other chemicals recommended to use currently.

Boscalid is a mitochondrial respiration inhibitor, i.e., succinate dehydrogenase inhibitor (SDHI). It acts through inhibition of succinate coenzyme Q reductase (also known as Complex II) on mitochondrial electron transfer chain. The mechanism is similar to other amides and benzamide fungicides. It provides effective control on the growth of pathogens in any stages, particularly strong inhibition on spore germination. It also has an excellent preventive effect and great permeability in leaves.

Boscalid is a foliar fungicide. It penetrates vertically from foliage to the top of the plant. Not only does it confer excellent preventive activity, but also it demonstrates certain curative effect. It can inhibit spore germination as well as germ tube growth and hapteron forming. It acts on all other fungal growth stages and shows excellent resistance to rain wash and great persistence.

Boscalid has a wide spectrum and is a systemic fungicide. It can effectively protect the plants from diseases arising from the tolerance of sterol inhibitors as well as dicarboximide, benzimidazoles, anilinopyrimidines, phenylamides and methoxyacrylates fungicides. The product can be transported towards the top of the plant through the xylem to tip and margin of leaves. It also possesses vertical permeability and is transferred through the leaf tissues to the back of the leaves. However, the product exhibits little effect on redistribution in vapor phase. Boscalid is mainly applied as a foliar spray to control powdery mildew, brown rot (Monilinia spp), leaf spot (Mycosphaerella spp) as well as diseases caused by Alternaria spp, Botrytis spp and Sclerotinia spp for grapes, lawns, fruit trees, vegetables and ornamental plants. It is also prepared as compounding formulations for arable crops such as cereals, grapes, peanuts and potatoes.

Chlorothalonil, with a chemical name of 2,4,5,6-tetrachloro-1,3-benzenedicarbonitrile, is represented by the following structure:

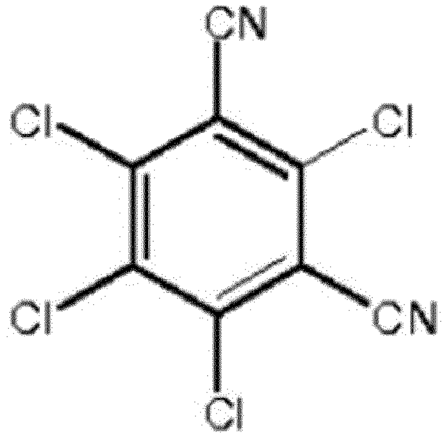

Chlorothalonil is a protective fungicide that substitutes for benzenes with broad spectrum activity. The mechanism is that it reacts with glyceraldehyde-3-phosphate dehydrogenase in the fungi cell by binding with the cysteine-containing protein of the enzyme so as to destroy its activity. The fungi die as a result of dysfunction of its cellular metabolism. Chlorothalonil does not have systemic effect, but it has a long-term effective period as it has a good adhesiveness which makes it resistant to rain wash when sprayed on plants. It is mainly applied for prevention and control of rust, anthracnosis, powder mildew and downy mildew of fruit trees and vegetables.

## SUMMARY OF THE INVENTION

The objective of the present invention is to provide a fungicidal mixture, which is able to control the activity of harmful fungus while decrease the total application volume of the active compound in regards of reducing the application rate and increase the activity spectrum of existing compounds of boscalid and chlorothalonil (synergistic mixture).

It is found that application of boscalid and chlorothalonil simultaneously (i.e. jointly), separately, or sequentially is more effective in preventing and controlling harmful fungus than applying them individually.

The present invention provides a fungicidal mixture which obtains a synergistic effect in prevention and control as a result of the binary combination of boscalid and chlorothalonil. It also broadens the fungicidal spectrum so that a single formulation can have multiple functions, which effectively alleviates or prevents the development of resistance of fungus. Surprisingly, the fungicidal activity of the fungicidal mixture of the present invention is significantly higher than the sum of activity of each active compound. In other words, there is an unpredictable and real synergistic effect, not merely an addition of activities.

The synergistic effect is particularly profound when the fungicidal mixture is consisted of the active compounds at a specific weight ratio. However, the weight ratio of active compound in the fungicidal mixture can vary within a range.

The technical solution adapted by the present invention to solve the technical problem is:

A fungicidal mixture, characterized in that: comprising boscalid and chlorothalonil active ingredients, wherein the weight ratio of boscalid and chlorothalonil is 1:100-100:1, preferably 1:50-50:1, more preferably 1:25-25:1.

A method for controlling plant pathogens, wherein applying the mixed fungicidal active ingredients on the pathogens and/or in their environment, or on plants, plant parts, seed, soil, locus, material or space.

A method for controlling plant pathogens, wherein boscalid and chlorothalonil are administered simultaneously, separately or sequentially.

A fungicidal mixture, comprising boscalid, chlorothalonil and filler and/or surfactant.

A fungicidal mixture which can be formulated into any agriculturally acceptable chemicals, wherein the formulations of the fungicidal mixture are suspension concentrate, seed coating, wettable powder, water dispersible granule, capsule suspension, ZC, coated granule, extruded granule, emulsifiable concentrate, micro-emulsion, oil in water emulsion, effervescent tablets.

A fungicidal mixture is applied to prevent and control of fungus on cereals, fruits, vegetables and economic crops.

It is particularly important of the fungicidal mixture to prevent and control a large number of fungi on various crops, such as banana, cotton, vegetables (e.g. cucumber, beans, tomato and cucurbitaceous crops), barley, grass, oat, coffee, potato, corn, fruits, rice, rye, soybean, grapevine, wheat, ornamental plants, sugar cane and plenty of seeds.

The fungicidal mixture of the present invention has an excellent performance of destroying fungi, which has a wide spectrum and high efficiency to be applied to prevent and control pathogenic fungi, such as Plasmodiophoromycetes, Oomycete, Chytridiomycetes, Zygomycetes, Ascomycetes, Basidiomycota, Deuteromycota. The fungicidal mixture containing boscalid and chlorothalonil may be used as foliage fungicide, fungicide for seed treatment or as soil fungicide to protect the crops.

The fungicidal mixture of the present invention specially suit for prevention and control of the following plant diseases:

- Alternaria on vegetable, oilseed rape, sugar beet, fruit and rice
- Aphanomyces on sugar beet and vegetable
- Bipolaris and Drechslera on corn, cereal, rice and lawn
- Blumeria graminis on cereal
- Botrytis cinerea on strawberry, vegetable, flowers and grapevine
- Bremia lactucae on lettuce
- Cercospora on corn, soybean, rice and sugar beet
- Cochliobolus on corn, cereal and rice (e.g., Cochliobolus sativus on cereal, Cochliobolus miyabeanus on rice)
- Colletotricum on soybean and cotton
- Drechslera on cereal and corn
- Exserohilum on corn
- Erysiphe cichoracearum and Sphaerotheca fuliginea on cucumber
- Fusarium and Verticillium on a variety of plants,
- Gaeumanomyces graminis on cereal
- Gibberella on cereal and rice (e.g., Gibberella fujikuroi on rice)
- Grain staining complex on rice
- Helminthosporium on corn and rice
- Michrodochium nivale on cereal,
- Mycosphaerella on cereal, banana and peanut
- Phakopsora pachyrhizi and Phakopsara meibomiae on soybean
- Phomopsis on soybean and sunflower
- Phytophthora infestans on potato and tomato
- Plasmopara viticola on grapevine
- Podosphaera leucotricha on apple
- Pseudocercosporella herpotrichoides on cereal
- Pseudoperonospora on hop and gourd
- Puccinia on cereal and corn

- Pyrenophora on cereal
- Pyricularia oryzae, Corticium sasakii, Sarocladium oryzae, S. attenuatum and Entyloma oryzae in rice
- Pyricularia grisea on lawn and cereal
- Pythium on lawn, rice, corn, cotton, oilseed rape, sunflower, sugar beet, vegetable and other planting
- Rhizoctonia on cotton, rice, potato, lawn, corn, oilseed rape, potatoes, sugar beet, vegetable and other planting
- Sclerotinia on oilseed rape and sunflower
- Septoria tritici and Stagonospora nodorum on wheat
- Erysiphe on grapevine
- Setospaeria on corn and lawn
- Sphacelotheca reilinia on corn
- Thievaliopsis on soybean and cotton
- Tilletia on cereal
- Ustilago on cereal, corn and sugar beet
- Venturia on apple and pear

In addition, the mixture of the present invention can be applied to protect materials (such as wood, paper, pigment dispersion, fiber or fabric) and stored devices from harmful fungi (such as Paecilomyces varioti).

The fungicidal mixture of the present invention also has an effective incentive mechanism to plants, so it is applicable to mobilize the internal defensive system of plants to resist attacks from harmful microorganism.

In the context, the compounds having plant incentive mechanism (resistance induction) can be understood as the substance which is able to stimulate the defense system of the plant inoculated with harmful fungi and makes it shows a significant resistance to these fungi after receiving treatment.

Therefore, the fungicidal mixture of the present invention can be applied to protect the plants treated to defense attacks from the above pathogens within a specific period, which is normally counted from 1 day to 10 days since the application of this active compounds treatment, preferably from 1 day to 7 days.

The fungicidal mixture of the present invention can be converted to conventional formulation, such as suspension, seed coating, wettable powder, water dispersible granule, capsule suspension, ZC, coated granule, extruded granule, emulsifiable concentrate, micro-emulsion, oil in water emulsion, effervescent tablets.

A fungicidal mixture mentioned in the present invention contains boscalid and chlorothalonil. In the said fungicidal mixture, the active compounds of boscalid and chlorothalonil are mixed with filler and/or surfactant.

In the said fungicidal mixture, the amount of active compounds of boscalid and chlorothalonil account for 5-90% of the fungicidal mixture.

In the said fungicidal mixture, the amount of active compounds of boscalid and chlorothalonil account for 10-80% of the fungicidal mixture.

According to EP-A 545099, boscalid can exist in the forms of various crystalline modifications and water. (See WO 03/29219 and WO 2004/72039)

According the present invention, the terminology "filler" refers to natural or synthetic organic or inorganic compounds that are able to combine or unite with active compounds for an easier application on the object (such as plant, crop or grass). Therefore, the preferred filler should be inert or at least agriculturally acceptable. The filler could be a solid or liquid.

The inactive vehicle used in the present invention could be a solid or liquid, as for solid vehicles, they can be: vegetable powder (e.g. soybean powder, starch, grain flour, wood flour, bark powder, saw dust, walnut shell flour, bran, cellulose powder, coconut shell, granules of corn, spike stalk and tobacco stems, and residues after extraction of plant essence), paper, saw dust, synthetic polymers of smashed synthetic resin, clays (e.g. kaolin, bentonite, acid clay, etc.) and talcum powder. The following substances of vehicle can be used separately or mixed with more than one of them:

silica (e.g. diatomaceous earth, silica sand, mica, hydrous silicic acid, calcium silicate), activated charcoal and natural mineral (pumice, attapulgite and zeolite), diatomaceous earth, sand and plastics (e.g. polyethylene, polypropylene, polyvinylidene chloride, etc.); inorganic mineral powder including potassium chloride, calcium carbonate, calcium phosphate; chemical fertilizers and soil manure including ammonium sulfate, ammonium phosphate, urea, ammonium green.

The liquid that can be used as vehicle materials may be chosen from the following substances: water, alcohols (e.g. methanol, ethanol, isopropanol, butanol, ethylene glycol, etc.), ketones (e.g. acetone, methyl ethyl ketone, diisobutyl ketone, cyclohexanone, etc.), ethers (e.g. diethyl ether, dioxane, methyl cellulose, tetrahydrofuran, etc.), aliphatic hydrocarbons (e.g. kerosene, mineral oil), aromatic hydrocarbons (e.g. benzene, toluene, xylene, solvent naphtha, alkylnaphthalene, chlorinated aromatic hydrocarbons, chlorinated aliphatic hydrocarbons, chlorobenzene, etc.), halogenated hydrocarbons, amides, sulfones, dimethylsulfoxide, mineral and vegetable oils, animal oils, etc.

In order to emulsify, disperse, solubilize and/or moist effective components, we can use surfactants, such as polyoxyethylene fatty alcohol ethers, polyoxyethylene alkyl aryl ether, polyoxyethylene higher fatty acid esters, polyoxyethylene alcohols or phenols phosphate, polyol fatty acid esters, alkyl aryl sulfonic acid, naphthalene sulfonic acid polymerization material, lignin sulfonate, polymer of comb-shaped copolymers sticks, butyl naphthalene sulfonate, alkyl aryl sulfonates, alkyl sulfosuccinate, sodium grease, condensates of fatty alcohol and epoxy ethane, alkyl taurine salt, polyacrylic acid and protein hydrolyzate; suitable oligosaccharides or polymers, such as based on separate vinyl monomers, acrylic acid, EO and/or PO, or their combination with, for example (poly)alcohols or (poly)amines.

In order to make the dispersion of effective components stable, attached and/or combined, we can use adjuvant such as xanthan gum, magnesium aluminum silicate, gelatin, starch, cellulose ether, polyvinyl alcohol, polyvinyl acetate, and natural phospholipids (e.g., cephalins and lecithins) and synthetic phospholipids, bentonite, lignin sulfonate, etc.

Wherein the antifreeze agent can be selected from ethylene glycol, propylene glycol, glycerol and sorbitol. Deflocculant, which is used to provide suspension property to the product, may be selected from adjuvant including naphthalene sulfonic acid polymers and polymeric phosphate.

The organic silicon can be used as defoaming agent.

The applicable coloring agents include inorganic pigments, such as iron oxide, titanium oxide and prussian blue; and organic pigments/dyes: alizarin dyes, azo dyes and metal phthalocyanine dyes; as well as trace elements, such as iron, manganese, boron, copper, cobalt, molybdenum and zinc salts.

Optionally, the coloring agents can also contain other additional ingredients, such as protective colloids, adhesives, thickeners, thixotropic agents, penetrating agents, stabilizers and sequestering agents.

The formulation of the present invention can be prepared by mixing the said active components with conventional additives through existing methods. The conventional additives include conventional fillers and solvents or diluents, emulsifiers, dispersing agents, adhesive or fixing agents, wetting agents, and/or water-proofing agents. They can also contain coloring agents, stabilizers, pigments, deforming agents, preservatives, thickeners, water, and other processing aids if necessary.

These compositions are directly applicable to the object to be treated by using suitable devices, such as spraying or dusting equipment, and they also include concentrated commercial compositions which have to be diluted before applying to the object.

The fungicidal mixture of the present invention that contains boscalid and chlorothalonil can also be applied jointly with other active components in order to, for example, extend the activity spectrum or prevent from forming resistance. The said other active components include fungicides, bactericides, attractants, insecticides, miticides, nematicides, growth regulators, herbicides, safeners, fertilizers or chemical pheromones, etc.

The compound of boscalid and chlorothalonil can be applied simultaneously or separately or sequentially and the sequence of applying them separately normally does not affect the efficiency of prevention and control.

The fungicidal mixture of the present invention can be applied by itself or in the form of its formulation or its applicable form prepared. We can use conventional methods to apply the mixture, such as irrigation, spray, mist, scattering and dusting. It can also be applied as powder for dry seed treatment, dry seed dressing, moist seed dressing, wet seed dressing, slurry seed dressing, solution for seed treatment, water soluble powder for seed treatment, water soluble powder for soil treatment or by forming a thin shell.

- During normal treatment of plant parts, the application rate of the active compound is generally from 5-2000 g / ha, preferably 20-900 g / ha, more preferably 50-750 g / ha.

In the treatment of seed, the application rate of active compound is 1-1000 g / 100 kg of seed, preferably 5-500 g / 100 kg of seed;

- For soil treatment, the application rate of the active compound is usually 0.1-10000 g / ha, preferably 1-5000 g / ha.

The above dosages are only normal indicatives, the real application dosage should be adjusted by the technician

in this field according to the necessity of the actual situation, especially after taking into account of the characteristics of the plant or crops and the severity of the pathogenic infection to be treated.

A method to prevent and control plant pathogens by separately or simultaneously applying boscalid and chlorothalonil on seed, plant or soil before or after planting, or prior to or after seedling in a manner of spraying or dusting.

An invention of fungicidal mixture which contains boscalid and chlorothalonil, and has a synergistic effect. The fungicidal activity of the fungicidal mixture of boscalid and chlorothalonil is significantly more active than the sum of each active compound. In other words, there is unpredictable but actually existing synergistic effect, instead of merely an addition of their activities.

When the weight ratio of the active compounds in the fungicidal mixture of the present invention reaches to a specific amount, the synergistic effect is more distinct.

The good fungicidal efficiency of the fungicidal mixture of the present invention can be demonstrated by the following embodiments. Although the fungicidal activity of single active compound is weak, the activity of the fungicidal mixture is greater than the sum of activities from each active compound used separately.

As compared with existing technology, the present invention has the following beneficial effects:

The present invention has provided a fungicidal mixture, which is able to obtain enhancement benefit regarding prevention and control through binary combination of boscalid and chlorothalonil, so as to achieve synergistic effect, extend the fungicidal spectrum, and give multiple effects from one formulation. In addition, due to the difference in mechanisms of boscalid and chlorothalonil, it is able to raise the efficiency of protection against diseases and reduce the occurrence of developing resistance by the pathogens.

## EMBODIMENT

In order to better explain the invention, several preferred embodiments are provided below.

The practice of combining active ingredients of different pesticides to prepare another pesticide is an effective and fast method of developing and researching new pesticides and preventing agricultural pathogens from developing resistance. In general, there are three kinds of outcomes after the combination of different pesticides: addictive effect, synergistic effect and antagonistic effect. However, which category the mixture belongs to is unpredictable and only could be determined by numerous experiments. Synergistic formulations are able to significantly increase the efficiency of prevention and decrease the consumption of pesticides which greatly slows down the speed of developing resistance by the pathogens. Therefore, it is an important method to prevent and control diseases.

After conducting plenty of screening tests, which have experimented on different weight ratio of boscalid and chlorothalonil and analyzed the results, the inventors have found that the obtained new fungicidal composition can create a synergistic effect when they are mixed at a specific range of weight ratio, rather than merely summing up their efficiency. To demonstrate, we have provided the following embodiments:

### Formulation Embodiment

Example 1: 2% boscalid + 10% chlorothalonil suspension concentrate

| | |
|---|---|
| Boscalid | 2% |
| Chlorothalonil | 10% |
| Sodium salt of naphthalene sulfonated formaldehyde condensates | 10% |
| Xanthan gum | 1% |
| Bentonite | 1% |
| Glycerol | 5% |
| Water | Balance to 100% |

The active ingredient, dispersant, wetting agent and water were mixed well according to the indicated ratios. 2% Boscalid + 10% chlorothalonil suspension concentrate was obtained after the grinding and/or high-speed shearing.

Example 2: 20% boscalid + 4% chlorothalonil wettable powder

| | |
|---|---|
| Boscalid | 20% |
| Chlorothalonil | 4% |
| Sodium dodecyl sulfate | 2% |
| Sodium ligninsulfonate | 5% |
| White carbon black | 10% |
| Kaolin | Balance to 100% |

The active ingredient, various additives and fillers were mixed according to the indicated ratios. 20% Boscalid + 4% chlorothalonil wettable powder was obtained after the ultrafine grinding by a mill.

Example 3: 0.2% boscalid + 20% chlorothalonil oil in water emulsion

| | |
|---|---|
| Boscalid | 0.2% |
| Chlorothalonil | 20% |
| N-methylpyrrolidone | 15% |
| Calcium dodecybenzene sulfonate | 5% |
| Agricultural emulsifier No.600 | 5% |
| Water | balance to 100% |

The active ingredients, solvents, emulsifiers were added and dissolved to form a homogeneous oil phase. An aqueous phase was obtained by mixing water soluble component and water. 0.2% Boscalid + 20% chlorothalonil oil in water emulsion was obtained by high-speed mixing the oil and aqueous phases.

Example 4: 3.5% boscalid + 1.5% chlorothalonil water dispersible granule

| | |
|---|---|
| Boscalid | 3.5% |
| Chlorothalonil | 1.5% |
| Sodium ligninsulfonate | 4% |
| Sodium dodecyl sulfate | 5% |
| Urea | 5% |
| Kaolin | Balance to 100% |

The active ingredient, dispersant, wetting agent, disintegrating agents and filler were mixed well according to the indicated ratios. A wettable powder was formed after airflow grinding. The wettable powder was then mixed with water and extruded to produce an extrudate. 3.5% Boscalid + 1.5% chlorothalonil water dispersible granule was obtained after dry sieving.

Example 5: 20% boscalid + 0.2% chlorothalonil suspension concentrate

| | |
|---|---|
| Boscalid | 20% |
| Chlorothalonil | 0.2% |
| Sodium salt of naphthalene sulfonated formaldehyde condensates | 10% |
| Xanthan gum | 1% |
| Bentonite | 1% |
| Glycerol | 5% |
| Water | Balance to 100% |

The active ingredient components, dispersant, wetting agent and water were mixed well according to the indicated ratios. 20% Boscalid + 0.2% chlorothalonil suspension concentrate was obtained after the grinding and/or high-speed shearing.

Example 6: 7.5% boscalid + 2.5% chlorothalonil oil suspension

| | |
|---|---|
| Boscalid | 7.5% |
| Chlorothalonil | 2.5% |
| Sodium salt of naphthalene sulfonated formaldehyde condensates | 5% |
| Xanthan gum | 1% |
| Bentonite | 1% |
| Glycerol | 5% |
| Soybean oil | Balance to 100% |

The active ingredient components, dispersant, wetting agent and water were mixed well according to the indicated ratios. 7.5% Boscalid + 2.5% chlorothalonil oil suspension was obtained after the grinding and/or high-speed shearing.

Example 7: 1% boscalid + 10% chlorothalonil wettable powder

| | |
|---|---|
| Boscalid | 1% |
| Chlorothalonil | 10% |
| Sodium dodecyl sulfate | 10% |
| Sodium ligninsulfonate | 5% |
| White carbon black | 10% |
| Kaolin | Balance to 100% |

The wettable power was prepared by mixing the above components according to the indicated ratios and then ground and pulverized.

Example 8: 50% boscalid + 1% chlorothalonil suspension concentrate

| | |
|---|---|
| Boscalid | 50% |
| Chlorothalonil | 1% |
| Disodium Laureth Sulfosuccinate | 10% |
| Modified calcium lignosulfonate | 5% |
| Xanthan gum | 1% |
| Bentonite | 1% |
| Glycerol | 5% |
| Water | Balance to 100% |

The suspension concentrate was prepared into suspension concentrate by evenly mixing the above components according to the indicated ratios and then ground.

Example 9: 30% boscalid + 20% chlorothalonil oil in water emulsion
Oil phase:

| | |
|---|---|
| Boscalid | 30% |
| Chlorothalonil | 20% |
| Methyl oleate | 38% |
| Polystyrene | 3.7% |

Aqueous phase:

| | |
|---|---|
| Xanthan gum | 0.07% |
| Sodium of condensation products of sulfonated formaldehyde and naphthalene sulfonic acid | 1% |
| Biocide | 0.2% |
| Water | Balance to100% |

Boscalid and chlorothalonil acetate were dissolved in methyl oleate. Polystyrene was added to obtain the oil phase. Components according to the formulation were mixed uniformly to obtain the aqueous phase. Oil in water emulsion was obtained by adding the oil phase to the aqueous phase under stirring.

Example 10: 25% boscalid + 1% chlorothalonil wettable powder

| | |
|---|---|
| Boscalid | 25% |
| Chlorothalonil | 1% |
| Sodium ligninsulfonate | 4% |
| Sodium lauryl sulfate | 2% |

(continued)

| Example 10: 25% boscalid + 1% chlorothalonil wettable powder | |
|---|---|
| Highly dispersed silicic acid | 1% |
| Kaolin | Balance to 100% |

The wettable powder was prepared by mixing the above according to the indicated ratios and then ground and crushed.

| Example 11: 1% boscalid + 25% chlorothalonil coated granules | |
|---|---|
| Boscalid | 1% |
| Chlorothalonil | 25% |
| Polyethylene glycol | 3% |
| Highly dispersed silicic acid | 1% |
| Calcium carbonate | Balance to 100% |

In a mixer, the ground active ingredients were coated evenly on the carrier wetted by polyethylene glycol to obtain the dust-free coated granule.

| Example 12: 20% boscalid + 70% chlorothalonil wettable powder | |
|---|---|
| Boscalid | 20% |
| Chlorothalonil | 70% |
| Sodium dodecyl sulfate | 1% |
| Sodium igninsulfonate | 1% |
| White carbon black | 1% |
| Kaolin | Balance to 100% |

The wettable power was prepared by mixing the above components according to the indicated ratios and then ground and pulverized.

| Example 13: 20% boscalid + 60% chlorothalonil extruded granules | |
|---|---|
| Boscalid | 20% |
| Chlorothalonil | 60% |
| Sodium ligninsulfonate | 4% |
| Carboxymethyl cellulose | |
| 2% | |
| Kaolin | Balance to 100% |

The active ingredient and adjuvants were mixed and ground, the mixture was wetting with water. The mixture was extruded and then dried in airflow.

| Example 14: 1% boscalid + 50% chlorothalonil suspension concentrate | |
|---|---|
| Boscalid | 1% |
| Chlorothalonil | 50% |
| Polyoxyethylene ether sulfosuccinate monoester disodium | 10% |
| Modified calcium lignosulfonate | 5% |
| Xanthan gum | 1% |
| Bentonite | 1% |
| Glycerol | 5% |

(continued)

| Example 14: 1% boscalid + 50% chlorothalonil suspension concentrate | |
|---|---|
| Water | Balance to 100% |

The suspension concentrate was prepared by mixing the components according to the indicated ratios and then ground.

| Example 15: 10% boscalid + 20% chlorothalonil ZC | |
|---|---|
| Atlox 4913 | 4% |
| Citric acid | 0.05% |
| Catalyst | 0.1% |
| Water | 13% |
| Boscalid | 10% |
| PAPI | 1.35% |
| Solvesso 200 | 10% |
| Atlox™ 4913 | 16% |
| Dispersant LFH | 0.3% |
| Defoamers | 0.16% |
| Urea | 8.4% |
| Chlorothalonil | 20% |
| Water | Balance to 100% |

An oil phase formed by PAPI, boscalid and Solvesso 200 was added to the liquid solution containing Atlox™4913 to form an emulsion by stirring. The mixture was heated and kept with the addition of the catalyst at 50 °C for 2 hours. A boscalid capsule suspension was obtained after cooling the mixture.

Atlox™4913, dispersant LFH, defoamer, urea, chlorothalonil and water were combined in proportion, and a suspension concentrate was obtained after high-speed shearing.

The obtained boscalid capsule suspension was combined with the chlorothalonil suspension concentrate, and stirred well to obtain 10% boscalid + 20% chlorothalonil ZC.

| Example 16: 5% boscalid + 15% chlorothalonil suspo-emulsion | |
|---|---|
| Boscalid | 5% |
| Chlorothalonil | 15% |
| Solvesso 200 | 30% |
| Ethoxylated castor oil | 4% |
| Disodium laureth sulfosuccinate | 10% |
| Modified calcium lignosulfonate | 5% |
| Xanthan gum | 1% |
| Bentonite | 1% |
| Glycerol | 5% |
| Water | Balance to 100% |

Boscalid was dissolved in Solvesso 200. The ethoxylated castor oil was added to obtain the boscalid emulsifiable concentrate.

Chlorothalonil, disodium laureth sulfosuccinate and above components according to the indicated ratios were uniformly mixed and ground to prepare a suspension.

The suspo-emulsion was obtained by adding the oil phase containing boscalid to the suspension containing chlorothalonil.

Example 17: 10% boscalid + 10% chlorothalonil emulsifiable concentrate

| | |
|---|---|
| Boscalid | 10% |
| Chlorothalonil | 10% |
| Ethoxylated castor oil | 5% |
| Calcium dodecybenzene sulfonate | 3% |
| Solvesso100 | Balance to 100% |

The above components were mixed and stirred to obtain a transparent homogeneous phase.

Example 18: 5% boscalid + 5% chlorothalonil suspension concentrates for seed dressing.

| | |
|---|---|
| Boscalid | 5% |
| Chlorothalonil | 5% |
| Disodium laureth sulfosuccinate | 10% |
| Modified calcium lignosulfonate | 5% |
| Xanthan gum | 1% |
| Bentonite | 1% |
| Glycerol | 5% |
| PVP-K30 | 1% |
| Water | Balance to 100% |

The suspension concentrates for seed dressing was prepared by mixing the above component according to the indicated ratios and then ground.

| Example 19: | 20% boscalid + 80% chlorothalonil |
|---|---|
| Boscalid | 20% |
| Chlorothalonil | 80% |

Boscalid and chlorothalonil were mixed evenly according to the indicated ratios.

Ratio of the above embodiment is the weight percentage.

**Biological test vitro synergism measurement**

The toxicity index of each of the formulations and the co-toxicity coefficient (CTC value) of the mixed formulation were calculated according to Sun Yunpei's method. When CTC $\leq$ 80, the composition exhibits an antagonistic effect. When 80 < CTC < 120, the composition exhibits an additive effect. When CTC $\leq$ 120, the composition exhibits a synergistic effect.

Actual toxicity index (ATI) = (standard formulation EC50/ testing formulation EC50)*100

Theoretical toxicity index (TTI) = (toxicity index of formulation A * percentage of A in the mixed formulation) + (toxicity index of formulation B * percentage of B in the mixed formulation)

Co-toxicity coefficient (CTC) = [actual toxicity index (ATI) of the mixed formulation / theoretical toxicity index (TTI) of the mixed formulation] *100

Test 1: Toxicity test of wheat downy mildew

The samples were selected from wheat seedlings in the same growing period of three to four leaf stage. Three pots were selected for each treatment and each pot was sprayed with 5 mL with a potter spray tower at the pressure of 50 PSI and each chemical was set for 12 concentration gradients. Inoculation was carried out 24 hours after the treatment of the formulations.
The conidiums from the leaves with wheat downy mildew (collected from a field) was spread evenly on the wheat seedlings, and then the wheat seedlings were put in the green house for culturing.

Seven days later, the disease index for the whole plant was studied according to the pathological grading standard of wheat downy mildew. The prevention and control efficacy was determined, and the generalized least square method was applied to calculate the half maximal effective concentration $EC_{50}$. The Sun Yunpei's method was applied to calculate the co-toxicity coefficient (CTC).

Table 1: Toxicity Test Result of Applying the Present Invention to Prevent and Control Wheat Downy Mildew

| Testing Formulation | Ratio | $EC_{50}$ (PPM) | TTI | ATI | CTC |
|---|---|---|---|---|---|
| Boscalid | - | 16.23 | 100 | / | / |
| Chlorothalonil | - | 18.76 | 86.5 | / | |
| Boscalid:Chlorothalonil | 1:100 | 13.87 | 117.04 | 86.63 | 135.1 |
| Boscalid:Chlorothalonil | 1:50 | 11.23 | 144.46 | 86.76 | 166.5 |
| Boscalid:Chlorothalonil | 1:25 | 9.40 | 172.65 | 87.02 | 198.4 |
| Boscalid:Chlorothalonil | 1:10 | 8.42 | 192.82 | 87.73 | 219.8 |
| Boscalid:Chlorothalonil | 1:5 | 7.59 | 213.80 | 88.75 | 262.8 |
| Boscalid:Chlorothalonil | 1:1 | 8.50 | 190.88 | 93.25 | 240.9 |
| Boscalid:Chlorothalonil | 5:1 | 8.11 | 200.09 | 97.75 | 204.7 |
| Boscalid:Chlorothalonil | 10:1 | 8.66 | 187.37 | 98.77 | 189.7 |
| Boscalid:Chlorothalonil | 25:1 | 10.51 | 154.49 | 99.48 | 155.3 |
| Boscalid:Chlorothalonil | 50:1 | 11.25 | 144.32 | 99.74 | 144.7 |
| Boscalid:Chlorothalonil | 100:1 | 12.96 | 125.23 | 99.87 | 125.4 |

From Table 1, we can conclude that when the ratio of boscalid to chlorothalonil on the prevention and control of wheat downy mildew was in the range of 1:100 to 100:1, all CTC values were larger than 120. This indicates that the mixing of these two components in the said range displayed a synergistic effect. A synergistic effect was particularly apparent when the components were present in the ratio of 1:5.

Test 2: Toxicity test of potato gray mold

The samples were selected from potato seedlings in the same growing period of three to four leaf stage. Three pots were selected for each treatment and each pot was sprayed with 5 mL with a potter spray tower at the pressure of 50 PSI and each chemical was set for 12 concentration gradients. Inoculation was carried out 24 hours after the treatment of the formulations. The conidiums from the leaves with potato gray mold (collected from a field) was spread evenly on the potato seedlings, and then the potato seedlings were put in the green house for culturing.

Seven days later, the disease index for the whole plant was studied according to the pathological grading standard of potato gray mold. The prevention and control efficacy was determined, and the generalized least square method was applied to calculate the half maximal effective concentration $EC_{50}$. The Sun Yunpei's method was applied to calculate the co-toxicity coefficient (CTC).

Table 2: Toxicity Test Result of Applying the Present Invention to Prevent and Control Potato Gray Mold

| Testing Formulation | Ratio | $EC_{50}$ (PPM) | TTI | ATI | CTC |
|---|---|---|---|---|---|
| Boscalid | - | 15.23 | 100 | / | / |
| Chlorothalonil | - | 38.03 | 68.71 | / | |
| Boscalid:Chlorothalonil | 1:10 | 16.64 | 91.52 | 69.02 | 132.6 |
| Boscalid:Chlorothalonil | 1:50 | 13.23 | 115.15 | 69.32 | 166.1 |
| Boscalid:Chlorothalonil | 1:25 | 11.62 | 131.02 | 69.91 | 187.4 |
| Boscalid:Chlorothalonil | 1:10 | 10.16 | 149.91 | 71.55 | 209.5 |
| Boscalid:Chlorothalonil | 1:5 | 8.52 | 178.82 | 73.93 | 287.9 |
| Boscalid:Chlorothalonil | 1:1 | 9.19 | 165.76 | 84.36 | 241.9 |
| Boscalid:Chlorothalonil | 5:1 | 8.18 | 186.25 | 94.79 | 196.5 |
| Boscalid:Chlorothalonil | 10:1 | 8.28 | 184.01 | 97.16 | 189.4 |
| Boscalid:Chlorothalonil | 25:1 | 9.42 | 161.73 | 98.80 | 163.7 |
| Boscalid:Chlorothalonil | 50:1 | 10.56 | 144.21 | 99.39 | 145.1 |
| Boscalid:Chlorothalonil | 100:1 | 11.30 | 134.78 | 99.69 | 135.2 |

From Table 2, we can conclude that when the ratio of boscalid to chlorothalonil on the prevention and control of potato gray mold was in the range of 1:100 to 100:1, all CTC values were larger than 120. This indicates that the mixing of these two components in the said range displayed a synergistic effect. A synergistic effect was particularly apparent when the components were present in the ratio of 1:5.

Test 3: Toxicity test of leaf spot of cabbage

The samples were selected from the cabbage seedlings in the same growing period. Three pots were selected for each treatment and each pot was sprayed with 5 mL with a potter spray tower at the pressure of 50 PSI and each chemical was set for 12 concentration gradients. Inoculation was carried out 24 hours after the treatment of the formulations. The conidiums from the leaves with cabbage leaf spot (collected from the field) was spread evenly on the cabbage seedlings, and the cabbage seedlings were then put in the green house for culturing.

Seven days later, the disease index for the whole plant was studied according to the pathological grading standard of cabbage leaf spot. The prevention and control efficacy was determined, and the generalized least square method was then applied to calculate the half maximal effective concentration $EC_{50}$. The Sun Yunpei's method was applied to calculate the co-toxicity coefficient (CTC).

Table 3: Toxicity Test Result of Applying the Present Invention to Prevent and Control Leaf Spot of Cabbage

| Testing Formulation | Ratio | $EC_{50}$ (PPM) | TTI | ATI | CTC |
|---|---|---|---|---|---|
| Boscalid | - | 26.13 | 100 | / | / |
| Chlorothalonil | - | 38.03 | 68.71 | / | |

(continued)

| Testing Formulation | Ratio | $EC_{50}$ (PPM) | TTI | ATI | CTC |
|---|---|---|---|---|---|
| Boscalid:Chlorothalonil | 1:10 | 26.09 | 100.15 | 69.02 | 145.1 |
| Boscalid:Chlorothalonil | 1:50 | 22.54 | 115.91 | 69.32 | 167.2 |
| Boscalid:Chlorothalonil | 1:25 | 20.87 | 125.22 | 69.91 | 179.1 |
| Boscalid:Chlorothalonil | 1:10 | 15.17 | 172.30 | 71.55 | 240.8 |
| Boscalid:Chlorothalonil | 1:5 | 16.00 | 163.30 | 73.93 | 230.1 |
| Boscalid:Chlorothalonil | 1:1 | 15.40 | 169.64 | 84.36 | 220.9 |
| Boscalid:Chlorothalonil | 5:1 | 13.71 | 190.61 | 94.79 | 201.1 |
| Boscalid:Chlorothalonil | 10:1 | 14.20 | 184.01 | 97.16 | 189.4 |
| Boscalid:Chlorothalonil | 25:1 | 17.11 | 152.74 | 98.80 | 154.6 |
| Boscalid:Chlorothalonil | 50:1 | 18.12 | 144.21 | 99.39 | 145.1 |
| Boscalid:Chlorothalonil | 100:1 | 19.22 | 135.98 | 99.69 | 136.4 |

From Table 3, we can conclude that when the ratio of boscalid to chlorothalonil on the prevention and control of cabbage leaf spot was in the range of 1:100 to 100:1, all CTC values were larger than 120. This indicates that the mixing of these two components in the said range displayed a synergistic effect. A synergistic effect was particularly apparent when the components were present in the ratio of 1:10.

Test 4: Toxicity Test Downy Mildew of Tomato

The samples were selected from the tomato seedlings in the same growing period. Three pots were selected for each treatment and each pot was sprayed with 5 mL with a potter spray tower at the pressure of 50 PSI and each chemical was set 12 concentration gradients. Inoculation was carried out 24 hours after the treatment of the formulations. The conidiums from the leaves with tomato downy mildew (collected from the field) was spread evenly on the tomato seedlings, and the tomato seedlings were then put in the green house for culturing.

Seven days later, the disease index for the whole plant was studied according to the pathological grading standard of tomato downy mildew. The prevention and control efficacy was determined, and the generalized least square method was then applied to calculate the half maximal effective concentration $EC_{50}$. The Sun Yunpei's method was applied to calculate the co-toxicity coefficient (CTC).

Table 4: Toxicity Test Result of Applying the Present Invention to Prevent and Control Tomato Downy Mildew

| Testing Formulation | Ratio | $EC_{50}$ (PPM) | TTI | ATI | CTC |
|---|---|---|---|---|---|
| Boscalid | - | 22.24 | 100 | / | / |
| Chlorothalonil | - | 32.27 | 68.91 | / | |
| Boscalid:Chlorothalonil | 1:10 | 26.29 | 84.58 | 69.22 | 122.2 |
| Boscalid:Chlorothalonil | 1:50 | 23.45 | 94.82 | 69.52 | 136.4 |
| Boscalid:Chlorothalonil | 1:25 | 17.88 | 124.37 | 70.11 | 177.4 |
| Boscalid:Chlorothalonil | 1:10 | 14.25 | 156.03 | 71.74 | 217.5 |
| Boscalid:Chlorothalonil | 1:5 | 12.50 | 177.97 | 74.09 | 257.1 |
| Boscalid:Chlorothalonil | 1:1 | 13.31 | 167.05 | 84.46 | 240.2 |
| Boscalid:Chlorothalonil | 5:1 | 11.86 | 187.55 | 94.82 | 197.8 |
| Boscalid:Chlorothalonil | 10:1 | 12.34 | 180.16 | 97.17 | 185.4 |
| Boscalid:Chlorothalonil | 25:1 | 14.64 | 151.86 | 98.80 | 153.7 |
| Boscalid:Chlorothalonil | 50:1 | 15.86 | 140.24 | 99.39 | 141.1 |

(continued)

| Testing Formulation | Ratio | $EC_{50}$ (PPM) | TTI | ATI | CTC |
|---|---|---|---|---|---|
| Boscalid:Chlorothalonil | 100:1 | 17.13 | 129.80 | 99.69 | 130.2 |

From Table 4, we can conclude that when the ratio of boscalid to chlorothalonil on the prevention and control of tomato downy mildew was in the range of 1:100 to 100:1, all CTC values were larger than 120. This indicates that the mixing of these two components in the said range displayed a synergistic effect. A synergistic effect was particularly apparent when the components were present in the ratio of 1:1.

**Test 5:**

A synergistic effect exists when the fungicidal activity of the active compound composition is greater than the sum of the activities of the active compounds applied individually. The expected activity for a given combination of two active compounds can be calculated in accordance with Colby's formula (refer to S.R. Colby, "Calculating Synergistic and Antagonistic Responses of Herbicide Combinations", Weeds 1967, 15, 20-22) as follows:

If X denotes the activity when using active compound A at an application rate of mg/ha or in a concentration of mppm;

Y denotes the activity when using active compound B at an application rate of ng/ha or in a concentration of nppm;

E denotes the activity when using active compounds A and B at application rates of m and ng/ha or in concentration of m and n ppm;

Then:

$$E = X + Y - \frac{X \cdot Y}{100}$$

If the actual fungicidal activity (O) is greater than the expected activity (E), then the activity of the composition is more effective than the effects that combined, i.e. the synergistic effect.
The following is one of the biological testing examples for the purpose of illustrating the present invention.

Activity of Preventing and Controlling Grey Mould of Potato

The leaves of the potato seedlings in pots were sprayed with the suspension concentrate in a range of concentrations of the active compounds.
The next day, the treated plants were inoculated with a spore suspension of potato cinerea. The pots were then allowed to stand for 24 hours in a room at 20-22 °C and with high humidity (90-95%). During this period, the spores germinated and the germ tubes penetrated into the leaf tissues. The day after, the testing plants were put back to the greenhouse at 20-22 °C at a relative humidity of 65-70% for culturing for another seven days. Later, the development of cinerea on the leaves was determined by visual observation.

| Active compound/ Active compound combination | Concentration (ppm) | Ratio | Observed activity (%) | Activity according to Colby's calculation (%) | Synergistic effect |
|---|---|---|---|---|---|
| Boscalid | 8 | - | 28 | - | |
| Chlorothalonil | 40 | - | 0 | - | |
| Boscalid+ Chlorothalonil | 8+40 | 1:5 | 84 | 28 | Yes |

## Claims

1. A fungicidal mixture, **characterized in that**: comprising boscalid and chlorothalonil active ingredients, wherein the

weight ratio of boscalid and chlorothalonil is 1:100-100:1.

2. The fungicidal mixture according to claim 1, **characterized in that**: wherein the weight ratio of boscalid and chlorothalonil is 1: 50-50:1.

3. The fungicidal mixture according to claim 1, **characterized in that**: wherein the weight ratio of boscalid and chlorothalonil is 1:25-25:1.

4. The fungicidal mixture according to claim 1, **characterized in that**: wherein the amount of boscalid and chlorothalonil accounts for 5-90% of the fungicidal mixture.

5. The fungicidal mixture according to claim 1 or claim 4, **characterized in that**: wherein the amount of boscalid and chlorothalonil accounts for 10-80% of the fungicidal mixture.

6. A fungicidal mixture, **characterized in that**: mixing the active ingredients in claim 1 with fillers and/or surfactants.

7. The fungicidal mixture according to claim 1, **characterized in that**: wherein the fungicide mixture can be formulated into any agriculturally acceptable chemicals.

8. The fungicidal mixture according to claim 7, **characterized in that**, wherein the formulations of the fungicidal mixture are suspension concentrate, seed coating, wettable powder, water dispersible granule, capsule suspension, ZC, coated granule, extruded granule, emulsifiable concentrate, micro-emulsion, oil in water emulsion, effervescent tablets.

9. A method for controlling plant pathogens, **characterized in that**, wherein applying the fungicidal mixture of a claim 1 on the pathogens and/or in their environment, or on plants, plant parts, seed, soil, locus, material or space.

10. The method according to claim 9, **characterized in that**: wherein boscalid and chlorothalonil are administered simultaneously, or separately or sequentially.

11. A use of the fungicidal mixture according to claim 1 for a purpose of controlling fungus.

12. A use of the fungicidal mixture according to claim 1 for controlling fungus on cereals, fruits, vegetables and economic crops.

# INTERNATIONAL SEARCH REPORT

International application No.
PCT/CN2014/084366

**A. CLASSIFICATION OF SUBJECT MATTER**

A01N 43/40 (2006.01) i; A01N 37/34 (2006.01) i; A01P 3/00 (2006.01) i

According to International Patent Classification (IPC) or to both national classification and IPC

B. FIELDS SEARCHED

Minimum documentation searched (classification system followed by classification symbols)

A01N; A01P

Documentation searched other than minimum documentation to the extent that such documents are included in the fields searched

Electronic data base consulted during the international search (name of data base and, where practicable, search terms used)

DWPI, VEN, CNKI, CA, STN: fungicidal, fungicide, synergistic, composition, phytopathogenic, boscalid, chlorothalonil

C. DOCUMENTS CONSIDERED TO BE RELEVANT

| Category* | Citation of document, with indication, where appropriate, of the relevant passages | Relevant to claim No. |
|---|---|---|
| PX | CN 103348982 A (JIANGSU ROTAM CHEMISTRY CO LTD) 16 October 2013 (16.10.2013) , see claims 1-12 | 1-12 |
| X | CN 1282214 A (BASF AG) 31 January 2001 (31.01.2001) , see claim 8; description, page 8, lines 9 and 10; page 9 lines 2-8, 22 and 23, page 10 lines 3-28, page 11 line 9 ,28 and 29, page 12, lines 7 and 8, pages 13 and 14, table 2 and table 4 | 1-12 |
| X | CN 101808521 A (BASF SE) 18 August 2010 (18.08.2010) , see description paragraphs [0171]-[0173], [0634], [0661]-[0682]and application examples 1-4 | 1-12 |
| A | GB 2457347 A (SYNGENTA PARTICIPATIONS AG) 19 August 2009 (19.08.2009) , see the whole document | 1-12 |
| A | JP 2012051843 A (NISSAN CHEMICAL IND LTD) 15 March 2012 (15.03.2012) , see the whole document | 1-12 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&"document member of the same patent family

| Date of the actual completion of the international search | Date of mailing of the international search report |
|---|---|
| 14 October 2014 (14.10.2014) | 03 November 2014 (03.11.2014) |

Name and mailing address of the ISA
State Intellectual Property Office of the P. R. China
No. 6, Xitucheng Road, Jimenqiao
Haidian District, Beijing 100088, China
Facsimile No. (86-10) 62019451

Authorized officer
XU, Li
Telephone No. (86-10) 62084406

Form PCT/ISA /210 (second sheet) (July 2009)

**INTERNATIONAL SEARCH REPORT**
Information on patent family members

International application No.
PCT/CN2014/084366

| Patent Documents referred in the Report | Publication Date | Patent Family | Publication Date |
|---|---|---|---|
| CN 103348982 A | 16.10.2013 | None | |
| CN 1282214 A | 31.01.2001 | DE 59805454 D1 | 10.10.2002 |
| | | CZ 20002227 A3 | 15.11.2000 |
| | | SK 8152000 A3 | 18.01.2001 |
| | | JP 2001526190 A | 18.12.2001 |
| | | ES 2183439 T3 | 16.03.2003 |
| | | BR 9813682 B2 | 01.12.2009 |
| | | CO 5040001 A1 | 29.05.2001 |
| | | EP 1039807 B1 | 04.09.2002 |
| | | EA 003390 B1 | 24.04.2003 |
| | | PT 1039807 E | 31.01.2003 |
| | | IL 136471 A | 01.08.2006 |
| | | NZ 505623 A | 28.02.2003 |
| | | US 6410572 B1 | 25.06.2002 |
| | | CN 1165229 C | 08.09.2004 |
| | | AT 2231153 T | 15.09.2002 |
| | | JP 4287996 B2 | 01.07.2009 |
| | | CA 2312994 C | 17.04.2007 |
| | | AU 750991 B2 | 08.08.2002 |
| | | PT 1039807 T | 31.01.2003 |
| | | PL 191033 B1 | 31.03.2006 |
| | | PL 341310 A1 | 09.04.2001 |
| | | ZA 9811559 A | 19.06.2000 |
| | | AU 2273299 A | 01.07.1999 |
| | | EP 1039807 A1 | 14.06.2001 |
| | | CA 2312994 A1 | 01.07.1999 |
| | | IL 136471 D0 | 14.06.2001 |
| | | CZ 293651 B6 | 16.06.2004 |

Form PCT/ISA /210 (patent family annex) (July 2009)

**INTERNATIONAL SEARCH REPORT**
Information on patent family members

International application No.
PCT/CN2014/084366

| Patent Documents referred in the Report | Publication Date | Patent Family | Publication Date |
|---|---|---|---|
| | | AR 018027 A1 | 31.10.2001 |
| | | HU 0100064 A3 | 28.12.2002 |
| | | DK 1039807 T3 | 14.10.2002 |
| | | BR 9813682 A | 10.10.2000 |
| | | SK 283641 B6 | 04.11.2003 |
| | | WO 9931983 A1 | 01.07.1999 |
| | | SI 1039807 T1 | 31.12.2002 |
| | | TW 491686 B | 21.06.2002 |
| | | HU 0100064 A2 | 28.05.2001 |
| CN 10180852 A | 18.08.2010 | US 2010197741 A1 | 05.08.2010 |
| | | AT 551901 T | 15.04.2012 |
| | | EP 2205082 B1 | 04.04.2012 |
| | | AU 2008303528 B2 | 23.05.2013 |
| | | AR 068562 A1 | 18.11.2009 |
| | | CA 2700131 A1 | 02.04.2009 |
| | | PT 2205082 E | 02.05.2012 |
| | | MX 2010002524 A | 25.03.2010 |
| | | WO 2009040397 A1 | 02.04.2009 |
| | | EP 2205082 A1 | 14.07.2010 |
| | | EA 201000429 A1 | 29.10.2010 |
| | | US 8349877 B2 | 08.01.2013 |
| | | AU 2008303528 A1 | 02.04.2009 |
| | | ES 2381320 T3 | 25.05.2012 |
| | | JP 2010540495 A | 24.12.2010 |
| GB 2457347 A | 19.08.2009 | GB 0800761 D0 | 27.02.2008 |
| | | GB 0822837 D0 | 21.01.2009 |
| JP 2012051843 A | 15.03.2012 | None | |

Form PCT/ISA /210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 545099 A
- WO 0329219 A
- WO 200472039 A

### Non-patent literature cited in the description


- **S.R. COLBY.** Calculating Synergistic and Antagonistic Responses of Herbicide Combinations. *Weeds,* 1967, vol. 15, 20-22